Europäisches Patentamt

European Patent Office

Office européen des brevets

(19)

(11) Veröffentlichungsnummer : **0 460 425 B1**

(12) # EUROPÄISCHE PATENTSCHRIFT

(45) Veröffentlichungstag der Patentschrift :
06.12.95 Patentblatt 95/49

(21) Anmeldenummer : 91107649.5

(22) Anmeldetag : 10.05.91

(51) Int. Cl.$^6$ : **H01M 4/24,** H01M 10/34,
H01M 4/32, H01M 4/62,
H01M 4/00

(54) **Gasdichter alkalischer Akkumulator.**

(30) Priorität : 02.06.90 DE 4017919

(43) Veröffentlichungstag der Anmeldung :
11.12.91 Patentblatt 91/50

(45) Bekanntmachung des Hinweises auf die
Patenterteilung :
06.12.95 Patentblatt 95/49

(84) Benannte Vertragsstaaten :
CH DE ES FR GB LI NL SE

(56) Entgegenhaltungen :
FR-A- 2 019 715
PATENT ABSTRACTS OF JAPAN vol. 11, no.
359 (E-559)21. November 1987

(73) Patentinhaber : VARTA Batterie
Aktiengesellschaft
Postfach 5 40,
Am Leineufer 51
D-30405 Hannover (DE)

(72) Erfinder : Klaus, Christoph
Bülowstrasse 14
W-6200 Wiesbaden (DE)
Erfinder : Kruger, Franz-Josef, Dr.
Volkerstrasse 9
W-6200 Wiesbaden (DE)
Erfinder : Sauer, Hans
Pflasterwiese 7
W-6270 Idstein-Walsdorf (DE)
Erfinder : Köhler, Uwe, Dr.
Falkensteiner Strasse 5
W-6233 Kelkheim (DE)

(74) Vertreter : Kaiser, Dieter Ralf, Dipl.-Ing.
Gundelhardtstrasse 72
D-65779 Kelkheim (DE)

**Beschreibung**

Die Erfindung betrifft einen gasdichten alkalischen Akkumulator zur Speicherung von elektrischer Energie mit einer positiven Elektrode, die im wesentlichen Nickelhydroxid als aktives Material umfaßt, einer negativen Elektrode und einem zwischen den Elektroden angeordneten Separator in einem geschlossenen Gehäuse.

Bei gasdichten alkalischen Akkumulatoren kann durch neue Techniken bei der Elektrodenherstellung und die resultierenden Elektrodenkonstruktionen einesteils die elektrochemische Masseausnutzung verbessert und zum anderen die Zellenfertigung noch rationeller gestaltet werden. Parallele Maßnahmen verfolgen das Ziel, den Gasverzehr zu fördern und die gasdichte Funktion der hermetisch verschlossenen Akkumulatorenzellen auf eine zuverlässigere Basis zu stellen.

Die elektrochemisch aktiven Elektrodenmaterialien, nämlich Nickelhydroxid für die positive Elektrode, Cadmiumhydroxid, Eisenhydroxid, Zinkhydroxid und Kobalthydroxid für die negative Elektrode, behaupten nach wie vor ihre Stellung als klassische Materialien für die Energiespeicherung im alkalischen Akkumulator. Bei den negativen Elektroden sind allerdings zur Wasserstoffspeicherung befähigte Metalle und Metallegierungen als Aktivmaterialien hinzugekommen. Damit hat sich die Zahl der klassischen alkalischen Akkumulatoren des gasdichten Typs um den gasdichten Nickel/Wasserstoffakkumulator vermehrt. Unter den Elektroden alkalischer Akkumulatoren sind derzeit verschiedene Ausführungsformen in Gebrauch. Besonders verbreitet ist bei beiden Elektrodenpolaritäten der Sintertyp. Nach dem Sinter-Imprägnierverfahren hergestellte Elektroden gelten als robust, langlebig und hochbelastbar, jedoch wegen der Vielzahl der Herstellungsschritte als aufwendig. Verschiedentlich werden Sinterelektroden heute durch Elektroden vom Preßpulvertyp ersetzt. Ihr Vorteil liegt in einer höheren Masseausnutzbarkeit bei geringerem Totmaterialanteil für das Leit- und Trägergerüst.

Eine spezielle Ausführungsform stellt die negative Elektrodeposit-Elektrode dar, die man durch kathodische Metallabscheidung aus Cadmiumsalzlösungen (nach DE-OS 28 22 821) erhält.

Eine noch sehr neue Entwicklung betrifft Elektrodenträgergerüste aus hochporösem Metallschaum, in welche eine fließfähige Aktivmasse eingeschlämmt oder einpastiert wird (vgl. US-PS 4 251 603 oder E-PS 185 830).

Aus der Patentliteratur sind auch Beispiele für Kombinationen des einen Elektrodentyps mit dem anderen in einem gasdichten alkalischen Akkumulator bekannt. So offenbart die DE-OS 34 16 817 die Möglichkeit, eine negative geladene Cadmiumelektrode des Elektrodeposit-Typs zusammen mit einer positiven geladenen Pulverpreßelektrode einzubauen. Gemäß E-PS 284 333 liegen beide Elektrodenspezies einer gasdichten Nickel/Wasserstoffbatterie in Gestalt der erwähnten Metallschaumgerüst Elektroden vor.

Die Unterschiede im mechanischen und elektrischen Verhalten der einzelnen Elektrodenausführungen machen es schwierig, für eine gasdichte alkalische Zelle bestimmter Bauart und mit bestimmten betrieblichen Auflagen eine geeignete Elektrodenauswahl aus dem vorhandenen Typen-Angebot zu treffen.

Der Erfindung liegt die Aufgabe zugrunde, eine gasdichte alkalische Akkumulatorenzelle bereitzustellen, die mit Elektroden bestückt ist, welche sich hinsichtlich Energiespeicherfähigkeit und mechanischer Stabilität optimal ergänzen und welche über einen unaufwendigen, möglichst automatisierbaren Fertigungsprozeß hergestellt werden können.

Die Aufgabe wird erfindungsgemäß durch einen Akkumulator gelöst, wie er im Patentanspruch 1 angegeben ist.

Danach erweist sich die Kombination zwischen einer positiven Metallschaumgerüst-Elektrode und einer negativen Walzelektrode in einem gasdichten alkalischen Akkumulator als sehr günstig. Dies hat nicht zuletzt herstellungstechnische Gründe. Da gasdichte Akkumulatoren zum großen Teil dem Typ der Wickelzelle angehören, sind die hierfür einzusetzenden neuen Elektroden in der Regel Bandelektroden. Der besonderen mechanischen Beanspruchung beim Wickelprozeß genügen sie durch eine hohe Flexibilität.

Auf besonders vorteilhafte Weise kommt die günstige Kombination von positiver Metallschaumgerüst-Elektrode und negativer Walzelektrode bei einem gasdichten Nickel/Wasserstoff-Akkumulator zum Tragen. Die positive Elektrode eines solchen Akkumulators gemäß der Erfindung basiert also auf einem Metallschaumträger, gewöhnlich aus Nickel, welcher bei extrem hoher Porosität -sein Porenvolumen erreicht mindestens 95 %- ein ausgezeichnetes elektrisches Leitvermögen besitzt. Mit Bezug auf dieses verhalten sich ein Cobeschichteter Nickelschaum oder ein Schaum aus einer Ni/Co-Legierung besonders günstig. In das offene Porensystem dieses Gerüstkörpers ist die positive Aktivmasse durch Einschlämmen oder Einpastieren eingebracht.

Hauptbestandteil der Aktivmasse ist Nickelhydroxid, das erfindungsgemäß von einer größeren Menge Nickelmetallpulver und gegebenenfalls weiterer Metallpulver aus der Reihe Co, Cu, Fe, Mo, W, Cr, Ti und Zn sowie einer kleineren Menge von weiteren Metall-Hydroxiden, zumindest einem Hydroxid aus der Reihe $Co(OH)_2$, $Cd(OH)_2$, $Zn(OH)_2$, $Al(OH)_3$, $Mg(OH)_2$, Eisenhydroxide und Mn-Hydroxide begleitet wird. Bei der Herstellung der positiven Aktivmasse geht man von einer Trockenmischung der genannten Bestandteile aus, wobei der Anteil des Nickelhydroxids an der Trockenmischung 75 - 90 Gew. %, der Anteil der Metallpulver 5 - 25 Gew. % und der Anteil an Fremdhydroxiden 1 - 10 Gew. % betragen sollte.

Bei dem Metallpulver-Anteil kann das Gewichtsverhältnis zwischen Nickel und der Summe der übrigen Metalle in den Grenzen 1 : 1 und 1 : 20 schwanken.

Vorteilhafterweise können die Fremdhydroxide, z. B. $Co(OH)_2$, $Zn(OH)_2$ oder $Mg(OH)_2$ im Nickelhydroxid bereits enthalten sein, wenn dieses auf dem Wege einer Simultanfällung gewonnen wurde. Das getrocknete Fällungsprodukt sollte dann aus 85 - 98 Gew. % $Ni(OH)_2$ und 12 - 15 Gew. % Fremdhydroxiden bestehen.

Zur Bereitung der streichfähigen Aktivmassenpaste wird die vorbeschriebene Trockenmischung in eine wässrige Dispersion eines plastifizierenden Bindemittels und eines Verdickers eingerührt. Diese Dispersion bildet die "wässrige Phase" der fertigen Paste bzw. Schlempe und macht etwa 30 % ihres Gewichtes aus.

Als Bindemittel eignen sich Polyethylen, Polypropylen, Acrylsäureester, Polybutadien, Polyvinylalkohol, Polyvinylacetat. Polytetrafluorethylen oder Polyvinylidenchlorid sowie Acrylsäureester-Copolymere, wobei sich aus dieser Stoffgruppe das Handelsprodukt Mowilith VDM 758 (Hersteller: Farbwerke Hoechst AG, Frankfurt-Höchst) besonders bewährt hat.

Zur Herstellung der Dispersion werden Bindemittel und Verdicker in solchen Mengen abgewogen und mit Wasser gemischt, daß diese Mischung ca. 4,5 Gew. % Bindemittel und ca. 0,8 Gew. % Verdicker enthält.

Die Aktivmasse für die positive Elektrode der Akkumulatorenzelle gemäß der Erfindung wird somit auf sehr einfache Weise, nämlich aus leicht beschaffbaren, weil durchwegs handelsüblichen Ausgangsstoffen über unkomplizierte und leicht automatisierbare Wiege- und Mischprozesse bereitgestellt.

Auf die Qualität der Aktivmassenpaste unter den Kriterien einer guten elektrochemischen Ausnutzbarkeit und einer geringen Quellungsneigung in der fertigen Elektrode haben auch morphologische Eigenschaften der Festbestandteile einen erheblichen Einfluß. So ist es günstig, wenn die Partikel des eingesetzten Nickelhydroxids, in welches gegebenenfalls Fremdhydroxide (aus einer Simultanfällung) eingeschlossen sind, sphärische Gestalt und eine Größe zwischen 3 µm und 70 µm besitzen. Das Nickelmetallpulver sollte bevorzugt ein Mond-Nickel sein und seine Teilchengröße bei 0,1 - 3 µm liegen.

Die Paste wird nunmehr durch Streichen in eine hochporöse Nickelschaumstruktur, die beispielsweise ein Porenvolumen von 97%, eine Dicke von 1,7 mm und ein Flächengewicht von 35 bis 65 mg/cm² besitzt, beidseitig eingebracht. Vorteilhafter läßt sich dieser Prozeß mittels einer Auftragseinrichtung, durch welche das Metallschaumgerüst in Bandform hindurchgeführt wird, als kontinuierliche Pastierung gestalten.

Eine sehr vorteilhafte Nachbehandlung des fertigen, getrockneten Elektrodenmaterials besteht darin, daß es in einem Bad mit Ni- oder Co-Salzen imprägniert und anschließend einer Fällauge ausgesetzt wird. Dadurch findet eine nachträgliche Auskleidung des Porensystems der Elektrode mit Nickelhydroxid bzw. Kobalthydroxid statt, die eine wesentliche Verbesserung der elektrochemischen Ausnutzbarkeit und elektrischen Belastbarkeit zur Folge hat.

Ein ähnlich günstiges Ergebnis läßt sich erzielen, wenn die Nickelhydroxidkörner vor dem Mischen mit einer dünnen metallischen Schicht aus Kobalt oder Nickel versehen werden.

Die negative Gegenelektrode zur Metallschaumgerüst-Elektrode in einem Akkumulator gemäß der Erfindung entsteht durch trockenes Aufwalzen des Aktivmaterials auf ein Trägermaterial, gegebenenfalls unter Zuhilfenahme eines Bindemittels. Im allgemeinen handelt es sich bei dem Aktivmaterial um eines der gängigen Metallhydroxide $Cd(OH)_2$, $Fe(OH)_2$, $Zn(OH)_2$, oder $Co(OH)_2$. Sie werden in gasdichten alkalischen Akkumulatoren der klassischen Art durch zusätzliche aktive Komponenten ergänzt, welche eine Entladereserve bilden oder, als Bestandteil der positiven Aktivmasse, einen Umpolschutz bewirken. Hinzu kommen an sich bekannte Hilfsmittel zur Unterstützung des Sauerstoffverzehrs und zur Verbesserung der elektrischen Leitfähigkeit. Das Trägermaterial besteht aus einem feinmaschigen Metallnetz oder einem Streckmetall aus Nickel, Eisen, Kupfer oder Silber. Aus Gründen der Kosteneinsparung kann statt massivem Nickel oder Silberdrahtgewebe auch vernickeltes oder versilbertes Eisen bzw. Kupfermaterial verwendet werden. Bei allen genannten Trägermaterialien bringt eine dem Aufwalzen der Elektrodenmasse vorausgehende stromlose oder galvanische Kobaltierung Vorteile hinsichtlich elektrochemischer Ausnutzbarkeit und Belastbarkeit.

Im Falle des bevorzugten Akkumulators gemäß der Erfindung, nämlich des Nickel/Wasserstoff-Akkumulators oder Metallhydrid-Akkumulators, bildet ebenfalls eine Trockenpulvermischung neben einer geringen Menge pulverförmigen Kunststoffs im wesentlichen die Walzmischung für die negative Elektrode. Das Aktivmaterial, zugleich Hauptbestandteil dieser Trockenpulvermischung, ist hier ein zur elektrochemischen Wasserstoffaufnahme und -speicherung fähiges Metallpulver oder eine Metallegierung in Pulverform. Die elektrochemische Energiespeicherung bei diesen Materialien besteht in der oberflächennahen Entladung eines Protons aus dem Elektrolyten zu einem neutralen Wasserstoffatom und der anschließenden Speicherung dieses Wasserstoffatoms im Innern des metallischen Festkörpers.

Das Aktivmaterial ist im entladenen Zustand der Zelle vorzugsweise ergänzt durch eine zusätzliche Menge des Metalls bzw. der Metallegierung in der Hydridform, es besitzt somit eine Entladereserve.

Zwecks Verbesserung der elektrischen Leitfähigkeit sind dem Aktivmaterial weiterhin Metallpulver aus Nickel, Kobalt oder Kupfer, wahlweise auch Graphit und Leitruß beigemischt. Schließlich sind neben dem Aktivmaterial sauerstoffverzehrende Mittel in Gestalt einer kohlehaltigen Mischung vorgesehen. Deren Komponenten sind Leitruß, Aktivkohle und Polytetrafluorethylen, die etwa im Gewichtsverhältnis 3 bis 20 Gew. %. vorzugsweise 7,5 Gew. % Leitruß, 50 bis 80 Gew. %, vorzugsweise 75 Gew. % Aktivkohle und 10 bis 30 Gew. %, vorzugsweise 17,5 Gew. % Polytetrafluorethylen zueinander stehen.

Diese Mischung kann entweder der fertigen Elektrode in einer dünnen Schicht aufgewalzt oder als Bestandteil der Trockenpulvermischung bereits in diese eingemischt werden.

Als Bindemittel für die negative Elektrode kommen Kunststoffe aus der Reihe Polyethylen, Polypropylen, Polytetrafluorethylen, Polyvinylidenfluorid, Polyvinylidencarbonat, Polyvinylalkohol, Polyisobutylen und Polyacryinitril infrage.

Es empfiehlt sich auch hier, zuerst eine intensive Durchmischung aller Komponenten der Trockenpulvermischung vorzunehmen und dieser dann das Bindemittel gesondert zuzumischen.

Die fertige Walzmischung setzt sich dann zusammen aus 60 bis 80 Gew. % $H_2$-speicherfähigem Metall oder Metallegierung, 5 bis 20 Gew. % desselben Aktivmaterials in der Hydridform, 10 bis 35 Gew. % Metallpulver oder 1 bis 6 Gew. % Ruß und Graphit als Leitmittel, 1 bis 6 Gew. % Bindemittel und 1 bis 8 Gew. % kohlehaltige Mischung für den Sauerstoffverzehr.

Damit entsteht die negative Walzelektrode vorzugsweise durch trockenes Aufwalzen auf ein Trägermaterial, wobei es günstig ist, die Walzmischung vor dem Aufbringen auf ein feinmaschiges Metallnetz oder Streckmetall zu einem Laminat von 0,3 bis 0,8 mm Dicke vorzuwalzen.

Sowohl bei der positiven Metallschaumgerüst-Elektrode als auch bei der negativen Walzelektrode hat sich eine der Masseeinbringung bzw. dem Aufwalzprozeß vorausgehende Kobaltierung des Trägers durch stromlose oder galvanische Behandlung in einer Kobaltsalze enthaltenden Badflüssigkeit als günstig erwiesen, da sich die Strombelastbarkeit dadurch erhöht.

Anhand zweier schematischer Figurendarstellungen werden die Herstellungsgänge für beide Elektrodenspezies noch einmal erläutert.

Figur 1 zeigt die Herstellung der positiven Metallschaumgerüst-Elektrode.

Figur 2 zeigt die Herstellung der negativen Walzelektrode.

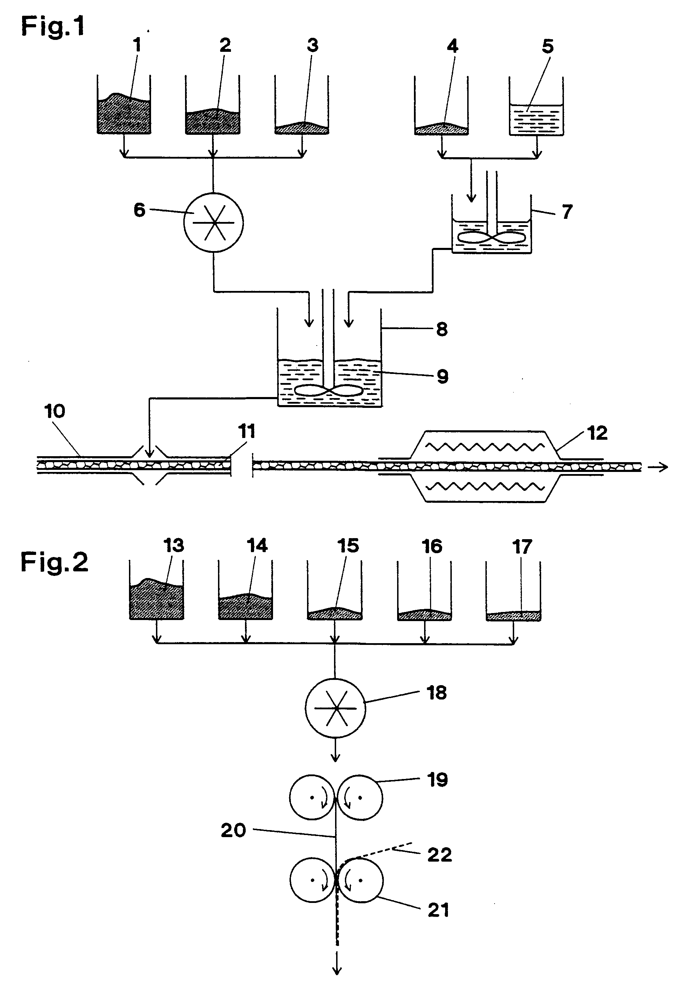

Gemäß Figur 1 werden jeweils für sich die Festbestandteile der zu bereitenden Aktivmassenpaste. nämlich Nickelhydroxid 1 (gegebenenfalls mit Fremdhydroxideinschlüssen), Metallpulver-Zusätze 2 und Metallhydroxidzusätze außer Ni(OH)$_2$, 3. sowie die Bestandteile der "flüssigen Phase", nämlich Bindemittel 4 und Wasser 5, im Trockenmischer 6 bzw. in dem Rührgefäß 7 gemischt. Festes und flüssiges Mischprodukt werden dann gemeinsam dem Mischgefäß 8 zugeführt und zur streichfähigen Paste 9 verrührt. Von dort gelangt die Paste zur Auftragseinrichtung 10, die von dem Metallschaum-Trägerband 11 durchlaufen wird, wobei dessen Porensystem die Paste aufnimmt. Das gefüllte Trägerband passiert schließlich eine Trockenstrecke 12.

Gemäß Figur 2 werden abgewogene Mengen einer $H_2$-Speicherlegierung 13, eines gleichen, jedoch mit Wasserstoff beladenen Legierungspulvers 14, eines Leitmaterials 15 (Metallpulver oder Ruß/Graphit-Gemisch) eines organischen Binders 16 sowie einer kohlehaltigen Mischung 17 als Mittel für den Sauerstoffverzehr im Trockenmischer 18 gemischt. In dem Kalander 19 wird diese Trockenmischung zu einem 0,3 bis 0,5 mm dicken Band 20 vorgewalzt und das Band anschließend im Kalander 21 auf ein netzförmiges Trägerband 22 aufgewalzt. Später kann noch eine Nachbehandlung (nicht dargestellt) des gewalzten Elektrodenbandes erfolgen, z. B. eine Kunststoffbeschichtung durch Tauchen In 5 bis 15 %ige Dispersionen von Polyethylen. Polytetrafluorethylen oder Acrylsäureverbindungen, wodurch sich die mechanische Stabilität des Bandes erhöht oder es wird die sauerstoffverzehr-Komponente 17 aus der Walzmischung herausgelassen und erst auf das fertige Elektrodenband durch Walzen aufgebracht. Durch diese Maßnahme bleibt die oxidationsempfindliche $H_2$-Speicherlegierung größtenteils von einer Berührung mit Sauerstoff verschont, der $O_2$-Verzehr wird in den Außenbereich der Elektrodenoberfläche verlegt, was für die Zyklenstabilität von Nickel/Wasserstoffzellen vorteilhaft ist.

Die zur Herstellung einer Akkumulatorenzelle gemäß der Erfindung eingesetzten Elektrodenspezies werden hinsichtlich ihrer Dicke so eingestellt, daß das Verhältnis von flächenbezogener Kapazität der negativen Elektrode zu flächenbezogener Kapazität der positiven Elektrode zwischen 1,2 und 2 liegt.

Für Zellen der AA-Version mit einer Nutzkapazität von 1050 mAh (0,2 CA) sind nachstehende Elektrodendimensionierungen günstig.

Positive Metallschaumgerüst-Elektrode:

| Länge: | 64 mm | | |
|---|---|---|---|
| Breite: | 41 mm | Kapazität: | 1050 mAh |
| Dicke: | 0,75 mm | | |

Negative Walzelektrode:

| Länge: | 90 mm | Kapazität: | 1660 mAh |
|---|---|---|---|
| Breite: | 41 mm | Entladereserve: | 450 mAh |
| Dicke: | 0,45 mm | Ladereserve: | 160 mAh |

Beide Elektroden werden im entladenen Zustand durch ein Vlies aus Polyethylen-, Polyamid- oder Polypropylenfasern voneinander separiert und spiralförmig gewickelt. Als Elektrolyt wird eine wässrige 5 bis 8 n KOH-Lösung mit LiOH-Zusätzen von 0,3 bis 2 n verwendet. Die Zellen werden durch Ladung mit einem 10stündigen Nennstrom und Entladung mit einem 5stündigen Strom in Betrieb gesetzt, nachdem sie durch eine Temperaturlagerung bei 45°C bis 80°C während eines Zeitraums von 1 bis 14 Tagen eine Aktivierung erfahren haben. Nach Absolvieren von zwei solcher Zyklen haben die Zellen ihre volle elektrische Belastbarkeit erreicht.

**Patentansprüche**

1. Gasdichter alkalischer Akkumulator zur Speicherung von elektrischer Energie mit einer positiven Elektrode, die im wesentlichen Nickelhydroxid als aktives Material umfaßt, einer negativen Elektrode und einem zwischen den Elektroden angeordneten Separator in einem geschlossenen Gehäuse, dadurch gekennzeichnet, daß die positive Elektrode durch Imprägnieren eines Metallschaumträgergerüstes hoher Porositiät mit einer wässrigen Aktivmassenpaste und die negative Elektrode durch Aufwalzen eines kunststoffgebunden Aktivmaterials auf ein netzförmiges Trägergerüst gebildet ist.

2. Gasdichter alkalischer Akkumulator nach Anspruch 1, dadurch gekennzeichnet, daß er ein Nickel/Wasserstoff-Akkumulator ist.

3. Gasdichter alkalischer Akkumulator nach Anspruch 2, dadurch gekennzeichnet, daß die Aktivmassenpaste durch Mischen einer wässrigen Bindemitteldispersion mit einer Trockenmischung von Nickelhydroxid, Nickelmetallpulver sowie mindestens einem weiteren Metallpulver aus der Gruppe der Metalle Co, Cu, Zn, Fe, Mo, W, Mn, Cr und Ti gebildet ist.

4. Gasdichter alkalischer Akkumulator nach Anspruch 2, dadurch gekennzeichnet, daß das Aktivmaterial der negativen Elektrode ein wasserstoffspeicherndes Metall oder eine Wasserstoffspeicherlegierung umfaßt.

5. Gasdichter alkalischer Akkumulator nach Anspruch 3, dadurch gekennzeichnet, daß die Trockenmischung zusätzlich ein oder mehrere Hydroxide aus der Gruppe $Co(OH)_2$, $Cd(OH)_2$, $Zn(OH)_2$, $Mg(OH)_2$, $Al(OH)_3$, Eisenhydroxide und Mn-Hydroxide enthält.

6. Gasdichter alkalischer Akkumulator nach Anspruch 3 oder 5, dadurch gekennzeichnet, daß der Gewichtsanteil des Nickelhydroxids an der Trockenmischung 75 bis 90 % und der Gewichtsanteil der metallischen Komponenten 5 bis 25 % beträgt.

7. Gasdichter alkalischer Akkumulator nach einem der Ansprüche 3, 5 oder 6, dadurch gekennzeichnet, daß das Bindemittel aus der Stoffgruppe Acrylsäureester, Polybutadien, Polyvinylalkohol, Polyvinylacetat, Polytetrafluorethylen und Polyvinylidenchlorid ausgewählt ist.

8. Gasdichter alkalischer Akkumulator nach Anspruch 4, dadurch gekennzeichnet, daß das Aktivmaterial im entladenen Zustand der Zelle eine zusätzliche Menge an Speicherlegierung in Hydridform enthält.

9. Gasdichter alkalischer Akkumulator nach Anspruch 4 oder 8, dadurch gekennzeichnet, daß das Aktivmaterial als weitere Komponenten Leitmittel und/oder sauerstoffverzehrende Mittel enthält.

10. Gasdichter alkalischer Akkumulator nach Anspruch 9, dadurch gekennzeichnet, daß das sauerstoffverzehrende Mittel aus einer Mischung von Leitruß, Aktivkohle und Polytetrafluorethylen besteht, welche in das Aktivmaterial mit eingemischt oder in Form einer dünnen Schicht auf die Elektrodenoberfläche aufgewalzt ist.

## Claims

1. Gas-tight alkaline accumulator for the storage of electrical energy, having a positive electrode containing substantially nickel hydroxide as the active material, a negative electrode and a separator arranged between the electrodes in a sealed housing, characterised in that the positive electrode is formed by impregnating a highly porous metal foam support framework with an aqueous paste of active mass, and the negative electrode is formed by applying a plastics-bound active material on to a reticular support framework by calender coating.

2. Gas-tight alkaline accumulator according to Claim 1, characterised in that it is a nickel/hydrogen accumulator.

3. Gas-tight alkaline accumulator according to Claim 2, characterised in that the paste of active mass is formed by mixing an aqueous binder dispersion with a dry mixture of nickel hydroxide, powdered nickel metal and at least one further powdered metal selected from the group comprising the metals Co, Cu, Zn, Fe, No, W, Mn, Cr and Ti.

4. Gas-tight alkaline accumulator according to Claim 2, characterised in that the active material of the negative electrode contains a hydrogen-storing metal or a hydrogen-storing alloy.

5. Gas-tight alkaline accumulator according to Claim 3, characterised in that the dry mixture contains additionally one or more hydroxides selected from the group comprising $Co(OH)_2$, $Cd(OH)_2$, $Zn(OH)_2$, $Mg(OH)_2$, $Al(OH)_3$, iron hydroxides and Mn hydroxides.

6. Gas-tight alkaline accumulator according to Claim 3 or 5, characterised in that the proportion by weight of nickel hydroxide in the dry mixture is from 75 to 90%, and the proportion by weight of the metallic components is from 5 to 25%.

7. Gas-tight alkaline accumulator according to one of Claims 3, 5 or 6, characterised in that the binder is selected from the substance group comprising acrylic acid esters, polybutadiene, polyvinyl alcohol, polyvinyl acetate, polytetrafluoroethylene and polyvinylidene chloride.

8. Gas-tight alkaline accumulator according to Claim 4, characterised in that the active material contains an additional quantity of storage alloy in the form of hydride when the cell is in the discharged state.

9. Gas-tight alkaline accumulator according to Claim 4 or 8, characterised in that the active material contains as further components conductive agents and/or oxygen-consuming agents.

10. Gas-tight alkaline accumulator according to Claim 9, characterised in that the oxygen-consuming agent comprises a mixture of conductive carbon black, activated carbon and polytetrafluoroethylene, which is incorporated into the active material during mixing or is applied in the form of a thin layer to the surface of the electrode by calender coating.

## Revendications

1. Accumulateur alcalin étanche aux gaz pour l'accumulation d'énergie électrique avec une électrode positive qui comprend pour l'essentiel de l'hydroxyde de nickel en tant que matériau actif, une électrode négative et un séparateur disposé entre les électrodes dans un boîtier clos, accumulateur alcalin étanche aux gaz caractérisé en ce que l'électrode positive est formée par imprégnation d'une structure porteuse de mousse métallique de porosité élevée avec une pâte de masse active aqueuse et l'électrode négative est formée par laminage d'un matériau actif lié par une matière synthétique sur une structure porteuse en forme de treillis.

2. Accumulateur alcalin étanche aux gaz selon la revendication 1 caractérisé en ce que c'est un accumulateur nickel/hydrogène.

3. Accumulateur alcalin étanche aux gaz selon la revendication 2 caractérisé en ce que la pâte de masse active est formée par mélange d'une dispersion aqueuse de liant avec un mélange à sec d'hydroxyde de nickel, de poudre métallique de nickel, ainsi qu'au moins une autre poudre métallique du groupe des métaux Co, Cu, Zn, Fe, Mo, W, Mn, Cr et Ti.

4. Accumulateur alcalin étanche aux gaz selon la revendication 2 caractérisé en ce que le matériau actif de l'électrode négative comprend un métal accumulant l'hydrogène ou bien un alliage accumulant l'hydrogène.

5. Accumulateur alcalin étanche aux gaz selon la revendication 3 caractérisé en ce que le mélange à sec comprend en supplément un ou plusieurs hydroxydes du groupe $Co(OH)_2$, $Cd(OH)_2$, $Zn(OH)_2$, $Mg(OH)_2$, $Al(OH)_3$, hydroxyde de fer et hydroxyde de manganèse.

6. Accumulateur alcalin étanche aux gaz selon la revendication 3 ou la revendication 5 caractérisé en ce que le pourcentage en poids de l'hydroxyde de nickel dans le mélange à sec est de 75 à 80 % et le pourcentage en poids des composants métalliques est de 5 à 25 %.

7. Accumulateur alcalin étanche aux gaz selon une des revendications 3, 5 ou 6 caractérisé en ce que le liant est choisi à partir du groupe de substances esters d'acide acrylique, polybutadien, alcool polyvinylique, acétate polyvinylique, polytetrafluorethylène et chlorure de polyvinylidène.

8. Accumulateur alcalin étanche aux gaz selon la revendication 4 caractérisé en ce que le matériau actif dans l'état déchargé de l'élément comprend une quantité supplémentaire d'alliage d'accumulation sous forme d'hydride.

9. Accumulateur alcalin étanche aux gaz selon la revendication 4 ou la revendication 8 caractérisé en ce que le matériau actif comprend comme autre composant un moyen de conduction et/ou un moyen de consommation d'oxygène.

10. Accumulateur alcalin étanche aux gaz selon la revendication 9 caractérisé en ce que le moyen consommant de l'oxygène consiste en un mélange de suie conductrice, de charbon actif et de polytetrafluorethylène, qui est incorporé par mélange au matériau actif ou bien qui est laminé sur la surface des électrodes sous la forme d'une couche mince.

# Fig.1

# Fig.2